# EUROPEAN PATENT APPLICATION

(11) **EP 1 091 142 A1**
(43) Date of publication of application: **11.04.2001**
(21) Application number: 99929897.9
(22) Date of filing: 19.07.1999
(51) Int. Cl.: F16F 15/02, C22C 38/00, B23D 47/00, B27B 33/08

(54) **DAMPING PLATE**

(30) Priority: 21.07.1998 JP 20563098
(71) Applicant: KANEFUSA KABUSHIKI KAISHA, Niwa-gun, Aichi 480-0192 (JP)
(72) Inventor: KAWAI, Takao, Kanefusa Kabushiki Kaisha, Aichi 480-0192 (JP)
(74) Representative: Prüfer, Lutz H., Dipl.-Phys.
(86) International application number: JP9903877
(87) International publication number: WO0005518

(57) **Abstract**

A damping plate capable of suppressing a production cost to a low level and eliminating a dislocation from occurring on a substrate starting with a cracking even if an external force is applied to it from a side direction, wherein a linear bead part (24) is formed at a specified part of a metal plate (10) so as to provide a damping effect to the metal plate (10) by a cracking (26) caused in the bead part (24) and, in the steel plate (10) large in hardening capability, a linear hardened part (28) is formed at a specified part of the steel plate (10) so as to provide a damping effect to the steel plate (10) by a cracking (30) caused in the hardened part (28).

## Description

### TECHNICAL FIELD

The present invention relates to a damping plate, more particularly to a damping plate which can exhibit a damping effect when used as a base of a circular turning tool such as a circular saw, as side panels of a housing for an apparatus causing great vibration and noises or as a antivibration protective cover.

### BACKGROUND ART

Circular turning tools whose bases each has a relatively small thickness with respect to its diameter, for example, circular saws and circular slitter knives are widely used in various fields of industries. These circular turning tools are generally used under high-speed revolution. However, the synergistic effect of the revolution of the tool with various kinds of conditions during idling or work cutting will often induce resonant vibration to generate great noises. Occurrence of such a resonant vibration during cutting of a work reduces cutting accuracy and finishing of cut surfaces in the work. In order to solve the problems described above, there have been proposed various kinds of damping structures for controlling resonant vibration in circular turning tools and the like.

For example, Japanese Unexamined Patent Publication No. Tokukaisho 60-40246 (hereinafter referred to as Prior Art 1) discloses a composite material for circular saws or band saws formed by sandwiching a copper-containing material having excellent damping property between a pair of steel plates to form a laminated structure and integrating the laminated structure into one body by means of spot welding or seam welding.

Meanwhile, Japanese Examined Patent Publication No. Tokukouhei 6-28841 (hereinafter referred to as Prior Art 2) discloses a disc rotor obtained by defining zigzagged slits in a circular tool base from the perimeter toward the intermediate zone such that each slit has an amplitude wider than the slit-to-slit distance to form two rows of elongated tongues such that the tongues in one row and those in the other row are arranged alternately and that the tip of a tongue is designed to be partly brought into face contact with roots of adjacent tongues (the inner wall surfaces of each slit are brought into contact with each other).

Japanese Utility Model Publication No. Jitsukouhei 6-20562 (hereinafter referred to as Prior Art 3) discloses a noise controlling system for a rotary saw base, obtained by forming a multiplicity of slits in a circular tool base such that the clearance of each slit is half as wide as or narrower than the thickness of the base and by filling the slits with a gum substance.

Japanese Examined Patent Publication No. Tokukousho 53-16952 (hereinafter referred to as Prior Art 4) discloses a rotary saw, in which a short slot is formed to extend from a tooth bottom of a blade of a saw body toward the center thereof, and the saw body is cracked fully over the thickness from the bottom of the slot curvilinearly toward a round hole defined in the saw body.

All the prior art techniques described above exhibit damping facilities and noise-controlling facilities of their own by incorporating a material having excellent damping property or by forming slits of various patterns, respectively. However, these techniques all involve other problems given below.

### Problem of Prior Art 1

Prior Art 1 involve problems mainly in terms of cost. Because a copper-containing material is sandwiched between a pair of steel plates, and the thus stacked materials are integrated into one body by welding, so that the copper-containing material must be procured additionally, increasing the cost and making the manufacture process intricate.

### Problem of Prior Art 2

In order to form a multiplicity of elongated tongues by defining zigzagged slits, the slits themselves should be fairly long. However, the longer the zigzagged slits, the lower becomes the rigidity of the base in the vicinity of the slits. In addition, the surface area over which the tip of an elongated tongue is partly brought into contact with roots of the adjacent tongues is extremely small for the increased length of the slits.

Besides, since the zigzagged slits are formed by laser machining, internal surfaces of each slit are almost right-angled with respect to the surface of the base to inevitably assume faces with least irregularity (faces having almost no resistance when they are caused to displace in the axial direction of the tool). For such reasons, the base of the rotor is deformed readily along the slits by an external pressure exerted sideward to the base to be likely to undergo the so-called unevenness in the alignment of sawteeth. Such a misalignment once occurred even for a short time deteriorates the work cutting accuracy and finish of cut faces in the work, disadvantageously. If an extremely great unevenness occurs, the base is caused to undergo plastic deformation, and the tool becomes unusable since it cannot restore its original shape. Particularly, the thinner the base, the more frequently such unevenness is likely to occur generally.

### Problem of Prior Art 3

While a multiplicity of slits formed in the base of a circular tool are filled with a gum substance such as chloroprene rubber and styrene butadiene rubber, the base of the tool is exposed to a cutting oil, a cleaning fluid, etc. Thus, the rubber packed into the slits swells with time and can slip off from the slits, and in this case the damping facility is lost. Meanwhile, depending on the shape of the slits, there occur problems including deterioration of work cutting accuracy due to the unevenness in the alignment of sawteeth as described in Prior Art 2.

### Problems of Prior Art 4

Cracks 3 (slits having no apparent clearance) shown in Fig. 2 of Japanese Examined Patent Publication No. Tokukousho 53-16952 are formed by press working. More specifically, each crack 3 is formed in a saw body 1 by punching an arcuate slit using a press such that the thus formed arcuate flap is bent downward (the arcuate flap is connected to the saw body 1 at the portion corresponding to the bowstring), and pressing back the thus bent arcuate flap to the original position from the opposite side of the saw body 1. A pair of sheared faces formed by this punching are not level. However, these opposing sheared faces are rubbed strongly against each other when the bent arcuate flap is pressed back to the original position. Although the internal surfaces of the crack 3 are brought into contact with each other more strongly than in Prior Art 2, distinguished protrusions formed on the sheared cut faces are crushed by the rubbing when the arcuate flap is pressed back. Therefore, the internal surfaces of the crack 3 or the opposing sheared faces are not meshed with each other. While the crack 3 is not very long, the slot 2 connected to the crack 3 is opening to the periphery of the saw body 1, so that the unevenness in the alignment of sawteeth as described in Prior Art 2 is likely to occur along the crack 3 and the slot 2. In an extreme case, the saw body 1 can undergo unrecoverable plastic deformation.

The present invention was proposed with a view to solving the problems inherent in the damping structures of the prior art techniques, and it is an objective of the invention to provide a damping plate which can shave costs and which undergoes no unevenness in the alignment of sawteeth along cracks formed in a base, even if it is subjected to an external sideward pressure.

### DISCLOSURE OF THE INVENTION

In order to solve the problems described above and attain the intended objective effectively, the damping plate according to the present invention is characterized in that it has a linear bead is formed at a necessary position of a metal plate and a crack portion occurred along the bead is intended to impart a damping effect to the metal plate.

As the metal plate employable here includes those having high quench hardenability, for example, structural carbon steel, carbon tool steel and structural alloy steel, and those having low quench hardenabiity (including those having no quench hardenability), for example, aluminum alloy plates and austenite stainless steel plates. The linear bead is formed by irradiating the metal plate with a beam having extremely high energy density, for example, a laser beam and an electron beam, while the beam is moved relative to the metal plate to melt the irradiated portion, followed by solidification, thus forming the crack in the bead.

The damping plate according to another aspect of the present invention proposed in order to solve the problems described above and attain the intended objective is characterized in that it has a linear quench hardened portion is formed at a necessary position of a steel plate having high quench hardenability and a crack portion occurred along this hardened portion is intended to impart a damping effect to the steel plate.

The linear quench hardened portion is formed by irradiating the steel plate with a beam having extremely high energy density, while the beam is moved relative to the steel plate to effect quench hardening of the irradiated portion, thus forming the crack in the quench hardened portion.

### BRIEF DESCRIPTION OF THE DRAWINGS

Fig. 1 shows in plan view a test piece of the damping plate according to a preferred embodiment of the present invention, illustrating a linear bead formed on the top side of the damping plate and a crack formed along the center of the bead;
Fig. 2 is a rear view of the test piece of the damping plate according to the preferred embodiment of the present invention, illustrating a crack running vertically on the rear side of the damping plate;
Fig. 3 is a cross-sectional view of the test piece of the damping plate shown in Fig. 1, in which internal surfaces of the crack are brought into contact with each other with almost no clearance therebetween, and the opposing serrated internal surfaces of the crack are meshed with each other;
Fig. 4 is a perspective view of a test piece of the damping plate according to the preferred embodiment of the present invention;
Fig. 5 is a perspective view showing an exemplary clamping jig for clamping the test piece according to the preferred embodiment of the present invention so as to irradiate the test piece with a high-energy density beam;
Fig. 6 is a graph showing cross section hardness of a bead formed using an S35C steel plate in Test example 1;
Fig. 7 is a graph showing cross section hardness of a bead formed using an S50C steel plate in Test example 1;
Fig. 8 is a graph showing cross section hardness of a bead formed using an SK5 steel plate in Test example 1;
Fig. 9 is a graph showing cross section hardness of a bead formed using an S35C steel plate in Test example 2;
Fig. 10 is a graph showing cross section hardness of a bead formed using an S50C steel plate in Test example 2;
Fig. 11 is a graph showing cross section hardness of a bead formed using an SK5 steel plate in Test example 2;
Fig. 12 is a graph showing cross section hardness of a bead formed using an SCM435 steel plate in Test example 3;
Fig. 13 is a plan view of a test piece of a damping plate used in Test example 4, illustrating a linear quench hardened layer formed on the top side of the damping plate and a crack formed along the center of the layer;
Fig. 14 is a rear view of the test piece of the damping plate used in Test example 4, illustrating a crack running vertically on the rear side of the damping plate;
Fig. 15 is a graph showing cross section hardness of a quench hardened layer formed using an S35C steel plate in Test example 4;
Fig. 16 is a graph showing cross section hardness of a quench hardened layer formed using an S50C steel plate in Test example 4;
Fig. 17 is a graph showing cross section hardness of a quench hardened layer formed using an SK5 steel plate in Test example 4;
Fig. 18 is an explanatory drawing showing an example of arrangement pattern of cracks to be formed in a target metal plate including the shape and number of cracks, which is applied to a circular saw;
Fig. 19 an explanatory drawing showing another example of arrangement pattern of cracks to be formed in a target metal plate including the shape and number of cracks, which is applied to a circular saw;
Fig. 20 is an explanatory drawing showing an example of arrangement pattern of cracks to be formed in a target metal plate including the shape and number of cracks, which is applied to a damping plate to be used for a housing and the like of an apparatus; and
Fig. 21 is an explanatory drawing showing slit-like through holes formed in a target metal plate which are connected to cracks and are filled with a viscoelastic resin, thus facilitating filling of the cracks with the resin.

### BEST MODE FOR CARRYING OUT THE INVENTION

The damping plate according to the present invention will be described below by way of preferred embodiments referring to the attached drawings. While the damping plate in the embodiments are made of various kinds of metallic materials, the metals preferably have "quench hardenability". However, it is not an essential requirement that the metal constituting the damping plate has "quench hardenability". The expression "quench hardenability" refers to a facility inherent in a metal that it gives a Rockwell C scale hardness (HRc) of 55 or more when a plate of the metal is heated to a hardening temperature region and then quenched. Metal plates having high quench hardenability include, for example, structural carbon steel, carbon tool steel and structural alloy steel, while those having low quench hardenability include (including those having no quench hardenability), for example, aluminum alloy plates and austenite stainless steel plates.

A damping plate using a steel plate having high quench hardenabiity is produced according to the following steps: First, a steel plate which can give a Rockwell C scale hardness (HRc) of 55 or more is selected and is irradiated, for example, with a YAG laser beam under traveling of the beam at a predetermined rate to form, on a surface of the steel plate, a narrow linear molten portion continuing to the rear side of the plate or to the middle of the thickness of the plate. This molten portion is left to stand for cooling and solidified immediately after the melting treatment to form a so-called bead (a slight linear protrusion). A structure having high hardness and high susceptibility to cracking forms in the bead of the steel plate having high quench hardenabiity under the so-called self-quenching action (thermal conductivity of the steel plate per se serves as a coolant to cause the metal plate to undergo hardening in the absence of coolant such as water).

In the structure having high susceptibility to cracking formed in the bead, a crack occurs throughout the thickness of the steel plate along the bead around the center thereof. It should be noted here, that even if the bead is formed to the middle of the thickness of the steel plate, the hardened structure in the vicinity of the bead undergoes self-quenching to form a quench hardened layer. The thus formed quench hardened layer also has high susceptibility to cracking, so that a crack also occurs throughout the thickness of the steel plate. The presence of the crack along the bead formed on the steel plate gives a damping plate having excellent damping property, because the internal surfaces of each crack (crack faces) are brought into contact with each other, even when external vibrations are applied to the steel plate.

Next, referring to damping plates using metal plates having low quench hardenability such as of aluminum alloys and austenite stainless steel, they can be produced in the same manner as described above. For example, an aluminum alloy plate is irradiated with a laser beam under traveling of the beam relative to the plate to form a narrow linear molten portion on the surface of the alloy plate penetrating throughout the thickness of the plate. The thus formed molten portion is left to stand for cooling and solidified immediately after the melting treatment to form a so-called bead (a slight linear protrusion). The bead of this alloy plate undergoes solidification cracking throughout the thickness of the plate in the process that the bead is formed. This cracking also gives a damping plate having excellent damping property. Incidentally, solidification cracking can be achieved in the same manner as described above in an austenite stainless steel plate.

As described above, in the damping plate of this embodiment, while linear beads are formed in any desired locations in a metal plate, and cracks occurred in these beads impart damping effect to the metal plate, the beads are formed by irradiating the metal plate with a beam having extremely high energy density typified by laser beams. More specifically, YAG laser and carbon dioxide gas laser in laser welding machines can be given as laser beam sources, and the mode of oscillation can suitably be selected from pulse oscillation and continuous wave oscillation depending on the properties of the metal plate to be treated. A beam having extremely high energy density other than laser beams, for example an electron beam, can suitably be used, so long as it can melt the metal plate upon irradiation therewith. Irradiation of the beam having extremely high energy density can be carried out as follows:
(1) The beam is irradiated upon an immobilized metal plate while the beam is moved linearly or curvilinearly; or
(2) The metal plate is fed linearly or curvilinearly with respect to the beam irradiated at a fixed position.

Here, referring to the steel plates having high quench hardenabiity, each plate may be irradiated at a desired position with a beam having extremely high energy density typified by laser beams to heat the irradiated portion to a hardening temperature or higher without melting it and form a linear hardened portion throughout the thickness of the plate likewise. In this case, no bead as described above is formed, but the heated portion forms a quench hardened layer under the self-quenching action to form a structure having high hardness and high susceptibility to cracking. A crack throughout the thickness of the plate is formed along each hardened portion around the center thereof. Such cracks can likewise give a damping plate having high damping property.

In order to confirm reproducibility of cracking, the following Test examples 1 to 3 were carried out in steel plates having high quench hardenability as described above.

### Test example 1

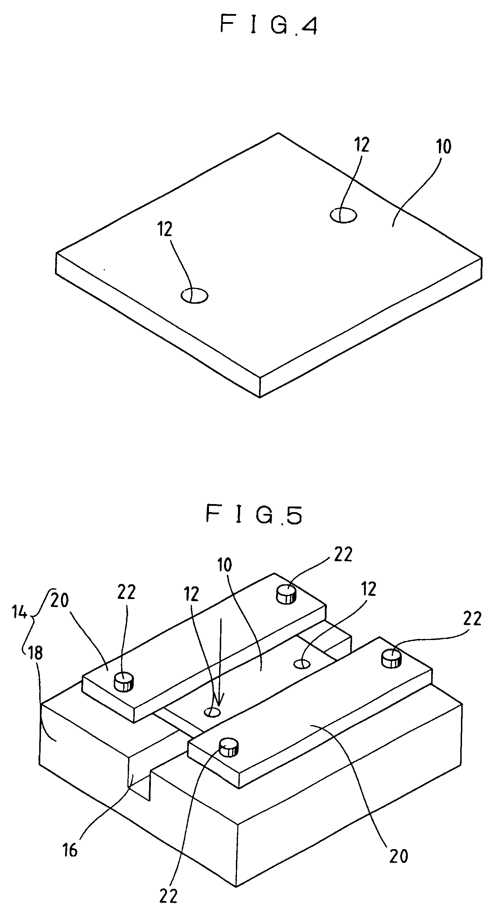

A 1.0 mm-thick steel plate having high quench hardenability, for example, one which can give a Rockwell C scale hardness (HRc) of 55 or more when hardened was selected and cut to obtain a rectangular test piece having a length of 50 mm and a width of 40 mm, as shown in Fig. 4. A pair of through holes 12 were defined at desire positions in the thus formed rectangular steel plate 10 with a necessary space secured between them, and the resulting steel plate 10 was set on a clamping jig 14 as shown in Fig. 5. This clamping jig 14 is composed essentially of a jig base 18 having a groove 16 extended along the center with a necessary depth and two holding plates 20 attached to the jig base 18. The holding plates 20 clamp the steel plate 10 in cooperation with the base 18. Each holding plate 20 was removably attached to the jig base 18 through bolts 22. Here, the steel plate 10 was clamped between the jig base 18 and the holding plates 20 such that the through holes 12 defined in the steel plate 10 locate immediately above the groove 16 formed in the base 18.

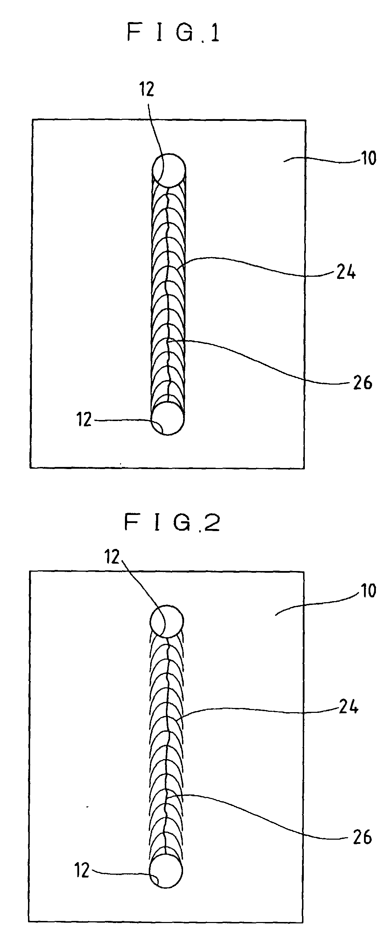

In the state where the steel plate 10 was clamped by the clamping jig 14 as shown in Fig. 5, a laser beam was irradiated upon the steel plate 10 immediately downward (as indicated by the arrow in Fig. 5) from a welding machine (not shown) having a YAG laser. Here, the laser beam was moved from one through hole 12 toward the other through hole 12 of the steel plate 10 at a necessary rate to heat and melt the plate throughout the thickness, forming a bead (a slight linear protrusion) 24 on a surface of the steel plate 10 as shown in Fig. 1. A structure having high hardness and high susceptibility to cracking was formed in the bead 24 under the self-quenching action described above. A crack 26 occurred throughout the thickness of the plate along the bead 24 around the center thereof. Fig. 1 shows a front side view of the steel plate 10, and Fig. 2 shows a rear side view of the same. More specifically, the crack 26 occurred between the pair of through holes 12 to penetrate the plate 10 throughout the thickness thereof from the top side bead 24 shown in Fig. 1 to the rear side bead 24 shown in Fig. 2.

The steel plate 10 having the crack 26 occurred as described above and the steel plate 10 having no crack 26 occurred yet were compared in terms of damping property by hammering them. As a result, the steel plate 10 having the crack 26 was found to have excellent auditory damping property. It was thus confirmed that the crack 26 present along each bead 24 formed in the steel plate 10 exhibits excellent damping property, because the internal surfaces of each crack 26 (crack faces) are brought into contact with each other to control external vibration if applied to the plate 10.

Processing conditions under which the bead 24 is formed are shown in Table 1. The YAG laser processing machine used here was of pulse oscillation mode. The laser beam was just-focused with no defocusing (0 mm).

**Table 1**

| Average output | Pulse (Hz) | Pulse output (J) | Pulse width (ms) | Traveling rate | Defocusing |
|---|---|---|---|---|---|
| 180W | 10Hz | 18J | 8ms | 300mm/min | 0mm (Just focused) |

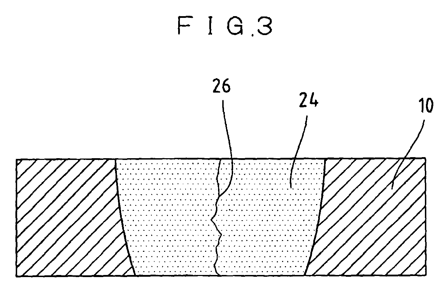

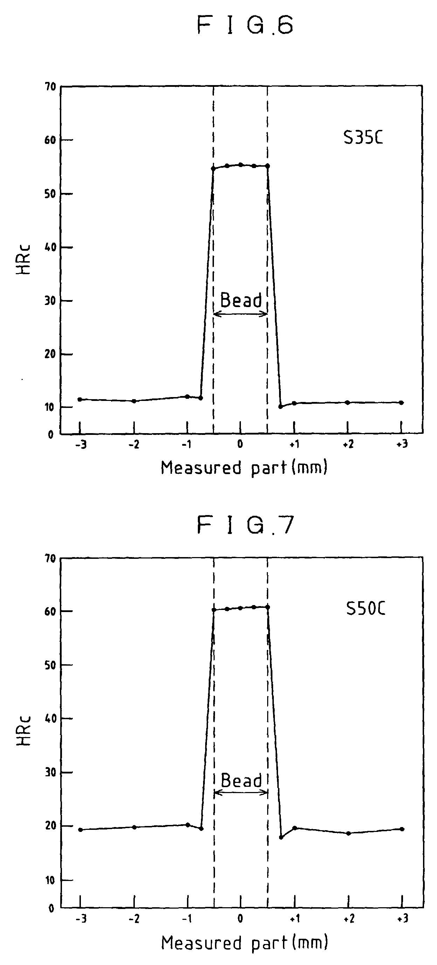

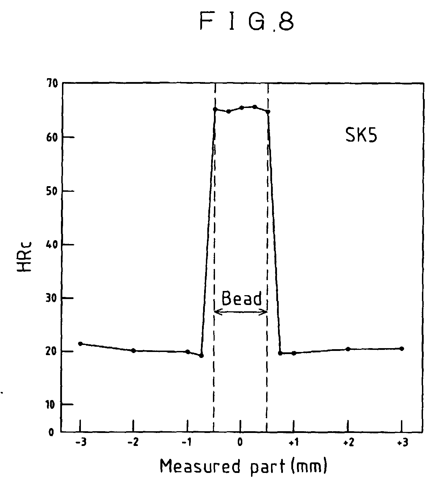

Graphs shown in Figs. 6, 7 and 8 show cross section hardness values of beads 24 formed using an S35C steel plate, an S50C steel plate and an SK5 steel plate, respectively. The axis of coordinate represents Rockwell C scale hardness (HRc). In these steel plates, the beads 24 all underwent quench hardening to a degree equal to or higher than in the general hardening treatment (hardening treatment using heating in a furnace, followed by quenching with a quenching medium) and formed heat-treated structures having extremely high susceptibility to cracking using no particular coolant. A crack 26 occurred in the bead 24 of each steel plate along it around the center thereof to penetrate from the top side bead to the rear side bead. The crack 26 had serrated topographic profiles as shown in Fig. 3, and the opposing internal surfaces (crack faces) were brought into mesh contact with each other.

### Test example 2

Test example 2 was carried out in the same manner as in Test example 1, except that the conditions for forming the bead in the latter was modified. Bead forming conditions in Test example 2 are shown in Table 2. The mode of oscillation in a YAG laser processing machine used here was of pulse oscillation. The laser beam was just-focused with no defocusing (0 mm).

**Table 2**

| Average output | Pulse (Hz) | Pulse output (J) | Pulse width (ms) | Traveling rate | Defocusing |
|---|---|---|---|---|---|
| 360W | 20Hz | 18J | 8ms | 300mm/min | 0mm (Just focused) |

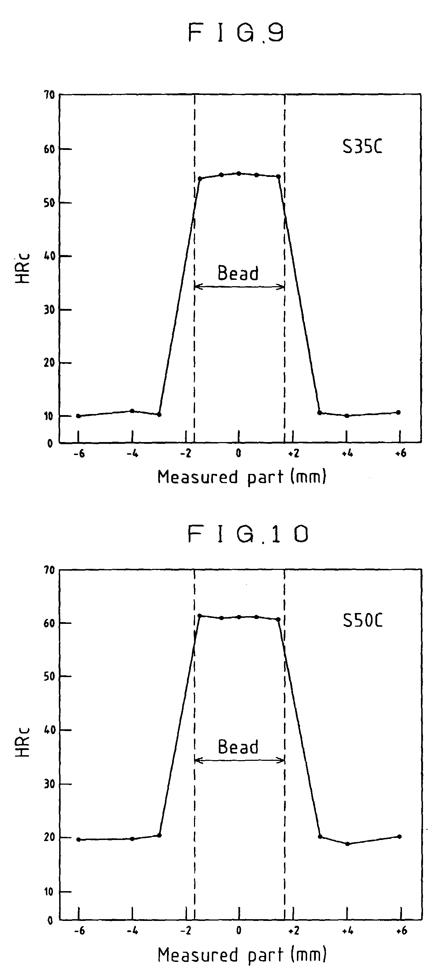

Figs. 9, 10 and 11 show cross section hardness values of beads 24 formed using an S35C steel plate, an S50C steel plate and an SK5 steel plate, respectively. In Test example 2, heat-treated structures having high hardness and very high susceptibility to cracking were formed again like in Test example 1. That is, quench hardening was achieved to a high degree of hardness equal to or higher than in the general hardening treatment, like in Test example 1, under the self-quenching action to form structures each having very high susceptibility to cracking. A crack 26 occurred along each bead 24 around the center thereof to penetrate from the top side bead to the rear side bead, as shown in Figs. 1 and 2. The crack 26 had serrated topographic profiles as shown in Fig. 3, and the opposing internal surfaces were brought into mesh contact with each other. Comparison of damping effects was carried out in the same manner as in Test example 1, and the steel plates 10 having cracks 26 occurred therein showed notably better results, respectively. Here, while the beads 24 formed in Test example 2 were wider than those in Test example 1, it was confirmed that the width of the bead 24 gives no influence upon the damping effect.

Although there is a great difference between Test example 1 and Test example 2 in the conditions for forming the beads 24, they have a common characteristic in that heat-treated structures having high hardness and high susceptibility to cracking are formed in the beads 24, inducing cracks 26 there. That is, even if they are quite different from each other in terms of the conditions for forming beads 24, cracks 26 can securely be formed, improving workability on a wide margin. Since the damping plate employing the crack 26 can be obtained by merely forming beads 24 on a surface of a steel plate 10, the trouble for forming the damping plate can be saved, and the manufactures' cost can be reduced, advantageously. In addition, as shown in Fig. 3, the opposing internal surfaces of the crack 26 had serrated topographic profiles and are meshed with each other to form a clearance as narrow as cannot be recognized visually. Therefore, the damping plate of the present invention enjoys an advantage that unevenness in the alignment of sawteeth is unlikely to occur, compared with the conventional damping plates having slits, even if an external force is applied to the plate. Incidentally, the laser processing machines in Test examples 1 and 2 respectively used a YAG laser in the pulse oscillation mode. However, the oscillation mode may be replaced with the continuous wave oscillation mode, or a carbon dioxide gas (CO₂) laser may be used in the pulse oscillation mode or in the continuous wave oscillation mode.

### Test example 3

In Test example 3, an SCM 435 steel plate containing chromium and molybdenum and having high quench hardenability was used in place of the steel plates such as of S35C, S50C and SK5 types used in the foregoing test examples. More specifically, an SCM435 steel plate having a thickness of 1.0 mm was selected and was cut to obtain a rectangular test piece having a length of 50 mm and a width of 40 mm. In the thus obtained SCM 435 steel plate 10 were defined a pair of through holes 12 with a necessary space secured between them, and the resulting steel plate 10 was set on a clamping jig 14 in the same manner as in Test examples 1 and 2. Bead forming conditions in Test example 3 are shown in Table 3. The mode of oscillation in the YAG laser processing machine used here was of pulse oscillation. The laser beam was just-focused with no defocusing (0 mm).

**Table 3**

| Average output | Pulse (Hz) | Pulse output (J) | Pulse width (ms) | Traveling rate | Defocusing |
|---|---|---|---|---|---|
| 340W | 10Hz | 34J | 15ms | 500mm/min | 0mm (Just focused) |

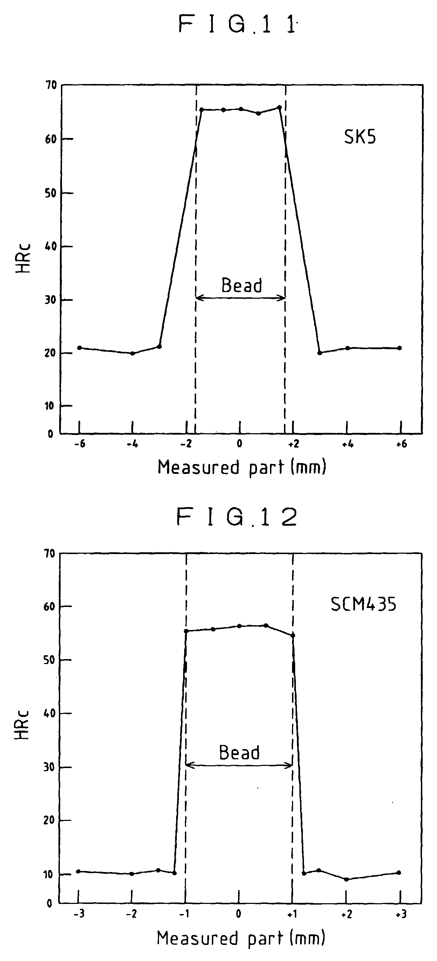

Fig. 12 shows cross section hardness of beads 24 formed using an SCM435 steel plate. In Test example 3, heat-treated structures having high hardness and very high susceptibility to cracking were formed again like in Test examples 1 and 2. That is, quench hardening was achieved under the self-quenching action to a high degree of hardness equal to or higher than in the general hardening treatment to form heat-treated structures having very high susceptibility to cracking. A crack 26 occurred along each bead 24 around the center thereof to penetrate from the top side bead to the rear side bead, as shown in Figs. 1 and 2. The crack 26 had serrated topographic profiles as shown in Fig. 3, and the opposing internal surfaces were brought into mesh contact with each other. Comparison of damping effects was carried out in the same manner as in Test example 1, and the SCM435 steel plate 10 having cracks 26 occurred therein showed a notably better result. Here, while the laser processing machine in Test example 3 used a YAG laser was in the pulse oscillation mode, it may be used in the continuous oscillation mode, or a carbon dioxide gas laser may be used in the pulse oscillation mode or in the continuous wave oscillation mode.

### Test example 4

A 0.8 mm-thick steel plate having high quench hardenability was selected and was cut to obtain a rectangular test piece having a length of 50 mm and a width of 40 mm, as shown in Fig. 4. In the thus obtained steel plate 10 were defined a pair of through holes 12 at desired positions respectively. The resulting steel plate 10 was set on a clamping jig 14 as shown in Fig. 5, and then a carbon dioxide gas laser beam was irradiated upon the steel plate 10 directly downward (as indicated by the arrow in Fig. 5). Here, the laser beam was moved at a necessary rate from one through hole 12 toward the other through hole 12 to effect heat treatment (at a temperature not lower than the hardening point and not higher than the melting point) without melting the surfaces of the steel plate. Heating conditions in this treatment are shown in Table 4. The mode of oscillation in the carbon dioxide gas laser processing machine used here was of continuous wave oscillation. Defocusing of the laser beam was set to 40 mm (out of focus). Since the side of the steel plate subjected to laser irradiation was of abrasive finishing, a commercially available laser absorber was applied to that side so as to control reflection of the laser.

**Table 4**

| Output | Traveling rate | Defocusing |
|---|---|---|
| 1KW | 1000mm/min | 40mm |

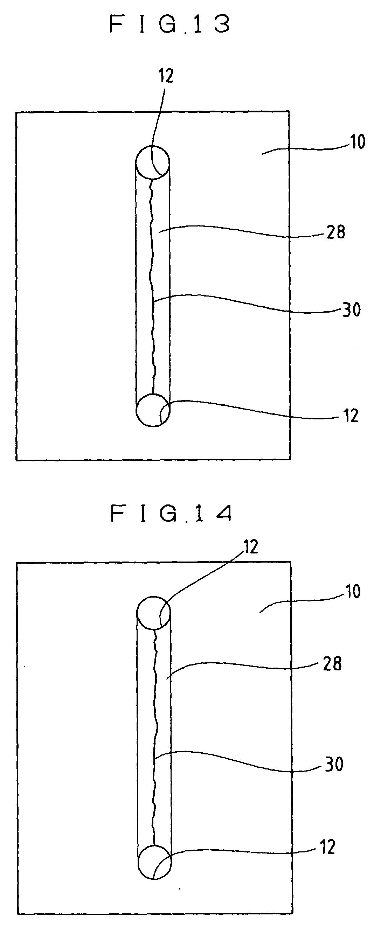

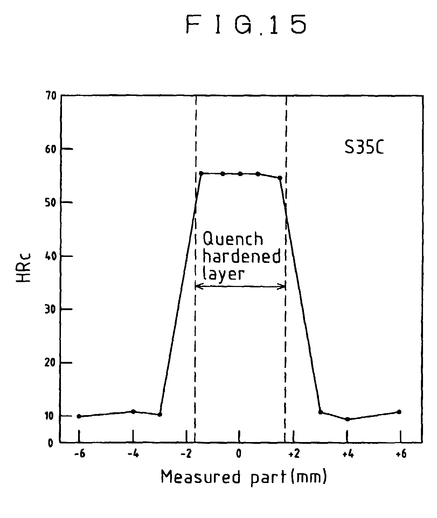

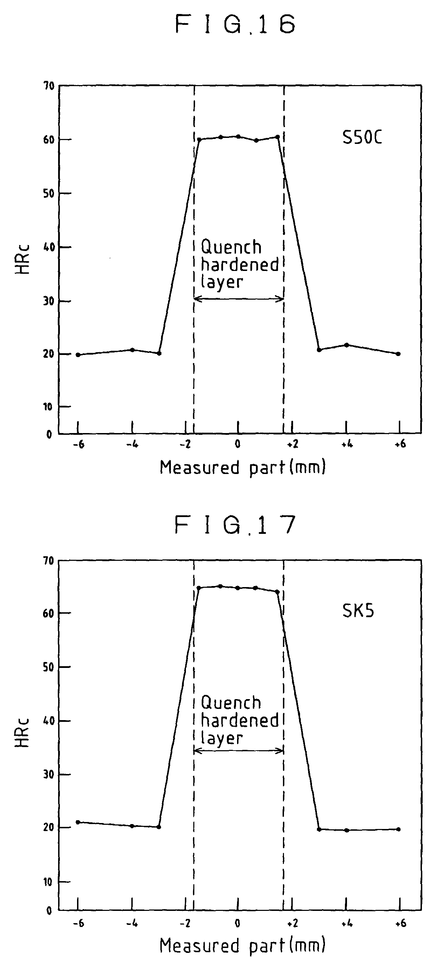

Figs. 15, 16 and 17 show cross section hardness values of quench hardened layers formed using an S35C steel plate, an S50C steel plate and an SK5 steel plate, respectively. A quench hardened structure having high hardness and high susceptibility to cracking formed in each linear quench hardened layer like in the cases of Test examples 1 to 3. A crack 30 was caused to occur along each quench hardened layer 28 around the center thereof penetrating throughout the thickness of the plate, as shown in Figs. 13 and 14. Opposing internal surfaces of each crack 30 were serrated more finely than those in Test examples 1 to 3. Damping property of the crack 30 in such quench hardened layer 28 was examined in the same manner as in Test example 1, and the steel plates 10 having cracks 30 occurred therein showed notably good results, respectively, compared with the steel plates 10 having no crack 30 occurred therein.

In the laser welding machine in Test example 3, while a carbon dioxide gas laser was used in the continuous wave oscillation mode, a crack 30 can likewise be caused to occur in the quench hardened layer even if a YAG laser is used in the continuous wave oscillation mode. A quench hardened layer can be formed in a steel plate 10, even when a carbon dioxide gas laser or a YAG laser is used in the pulse oscillation mode. It should be noted, however, that it was confirmed to be advantageous to use such lasers in the continuous wave oscillation mode when quench hardening is to be achieved without melting the surface of the steel plate, since the depth of the quench hardened layer formed using the pulse oscillation mode tends to be smaller than that formed using the continuous wave oscillation mode.

Next, the following Test examples 5 and 6 were carried out for an aluminum alloy plate and an austenite stainless steel plate, which have low quench hardenability, respectively.

### Test example 5

In Test example 5, a solidification crack (to be induced by the stress of shrinkage occurring when a molten metal solidifies) was formed along a bead of an aluminum alloy plate. First, a 0.8 mm-thick aluminum alloy plate was cut to obtain a rectangular test piece having a length of 50 mm and a width of 40 mm as shown in Fig. 4. In the thus obtained aluminum alloy plate 10 were defined a pair of through holes 12 at desired positions respectively with a required space being secured between them. The resulting alloy plate 10 was set on a clamping jig 14 as shown in Fig. 5, and a YAG laser beam was irradiated upon the alloy plate 10 directly downward. Here, the laser beam was moved at a necessary rate from one through hole 12 toward the other through hole 12 of the aluminum alloy plate 10 to melt the alloy plate 10 along the irradiation throughout the thickness of the plate 10 and form a bead 24 on a surface of the alloy plate. Components (two kinds of materials shown in the following Table 5) of the aluminum alloy plate 10 and conditions for forming the bead 24 are shown in Tables 5 and 6 respectively. The mode of oscillation in the YAG laser welding machine used here was of pulse oscillation. The laser beam was just focused with no defocusing (0 mm).

**Table 5**

| Components of Aluminum Alloy Plate | | | | | | | | | | |
|---|---|---|---|---|---|---|---|---|---|---|
| Aluminum alloy plate | Si | Fe | Cu | Mn | Mg | Cr | Zn | Zr+Ti | Ti | Al |
| A5052 | 0.08 | 0.22 | 0.02 | 0.02 | 2.51 | 0.23 | 0.01 | - | - | q.s. |
| A2017 | 0.52 | 0.30 | 3.85 | 0.63 | 0.62 | 0.03 | 0.11 | 0.04 | 0.02 | q.s. |

**Table 6**

| Average output | Pulse (Hz) | Pulse output (J) | Pulse width (ms) | Traveling rate | Defocusing |
|---|---|---|---|---|---|
| 360W | 10Hz | 36J | 8ms | 500mm/min | 0mm (Just focused) |

A solidification crack 26 occurred in the aluminum alloy plate 10 along the bead 24 around the center thereof to penetrate from the top side bead to the rear side bead, as shown in Figs. 1 and 2. This solidification crack 26 was induced due to the stress of shrinkage occurred when the molten aluminum alloy solidifies, and solidification cracking can be induced stably by increasing the stress of solidification shrinkage (to be described later). The solidification crack 26 had a serrated topographic profile as shown in Fig. 3, and the opposing internal surfaces were brought into mesh contact with each other. The aluminum alloy plate 10 having a solidification crack 26 thus occurred and an aluminum ahoy plate 10 having no bead 24 formed yet were compared with each other in the same manner as in Test example 1, and the former showed notably better damping property.

### Test example 6

In Test example 6, a solidification crack was formed along a bead of an austenite stainless steel plate 10. Before starting the test, an austenite stainless steel plate 10 having a thickness of 1.0 mm was cut to obtain a rectangular test piece having a length of 50 mm and a width of 40 mm, as shown in Fig. 4. A pair of through holes 12 were defined in this stainless steel plate 10 at desired positions respectively. The resulting stainless steel plate 10 was set on a clamping jig 14 as shown in Fig. 5, and then a YAG laser beam was irradiated upon the plate 10 directly downward. Here, the laser beam was moved at a necessary rate from one through hole 12 toward the other through hole 12 of the stainless steel plate 10 to melt the plate 10 along the linear irradiation track throughout the thickness of the plate 10 and form a bead 24 on a surface of the steel plate. Components of the austenite stainless steel plate 10 and conditions for forming the bead 24 are shown in Tables 7 and 8 respectively. The mode of oscillation in the YAG laser welding machine was of pulse oscillation. The laser beam was just focused with no defocusing (0 mm).

**Table 7**

| Stainless Steel Plate | | | | | | | |
|---|---|---|---|---|---|---|---|
| Stainless steel plate | C | Si | Mn | P | S | Ni | Cr |
| SUS304 | 0.07 | 0.35 | 0.56 | 0.034 | 0.011 | 8.06 | 18.11 |

**Table 8**

| Average output | Pulse (Hz) | Pulse output (J) | Pulse width (ms) | Traveling rate | Defocusing |
|---|---|---|---|---|---|
| 300W | 10Hz | 30J | 10ms | 300mm/min | 0mm (Just focused) |

Although the cross section hardness of the bead 24 formed in this stainless steel plate 10 was not so high as in the steel plate having high quench hardenability as described in Test example 1, a solidification crack 26 occurred along the bead 24 around the center thereof penetrating from the top side bead to the rear side bead, as shown in Figs. 1 and 2. This solidification crack 26 occurred due to the stress of shrinkage when the molten stainless steel underwent solidification, and solidification cracks can be induced stably by increasing the stress of solidification shrinkage (to be described later). The solidification crack 26 had a serrated topographic profile as shown in Fig. 3, and the opposing internal surfaces were brought into mesh contact with each other. The stainless steel plate 10 having a solidification crack 26 thus formed and a stainless steel plate 10 having no bead 24 formed yet were compared with each other in the same manner as in Test example 1, and the former showed notably better damping property.

It was confirmed common to Test example 5 and Test example 6 that it is effective to use a YAG laser in the pulse oscillation mode, since solidification cracks hardly occur if the YAG laser is irradiated in the continuous wave oscillation mode. As described before, solidification cracking is induced by the stress of shrinkage occurring when a molten metal solidifies, and solidification crack can be formed stably by increasing the stress of solidification shrinkage. That is, if a YAG laser is used in the pulse oscillation mode, the target metal melts a little in the pulse-on state, and the molten metal thus formed is quenched to be solidified in the next pulse off state. Repetition of the cycle of melting and solidification forms a bead, and the laser beam irradiated in the pulse oscillation mode accelerates rapid solidification of the molten metal compared with that irradiated in the continuous wave oscillation mode. Thus, it was found that the metal molten by the laser beam irradiated in the pulse oscillation mode undergoes a greater stress of solidification shrinkage and that solidification cracking occurs stably.

Although not shown in each test example, the ratio of pulse-on to pulse off, or the duty ratio (pulse-on time/(pulse-on time + pulse off time)) influences greatly in forming solidification cracks. While a duty ratio of 8 % was used in the aluminum alloy plate in Test example 5, solidification cracking was induced stably up to the duty ratio of 30 % under the laser irradiation conditions for melting the plate throughout the thickness thereof. While a duty ratio of 10 % was used in the stainless steel plate in Test example 6, solidification cracking was induced stably up to the duty ratio of 20 % under the laser irradiation conditions for melting the plate throughout the thickness thereof.

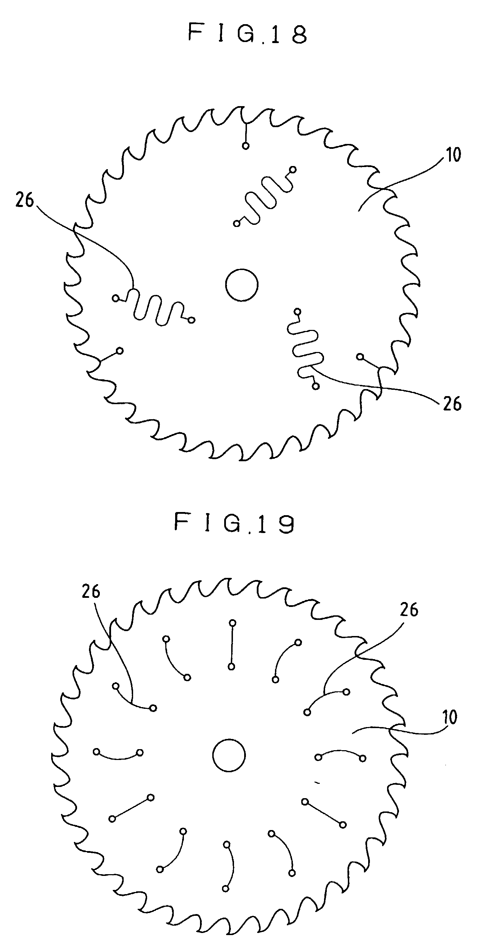

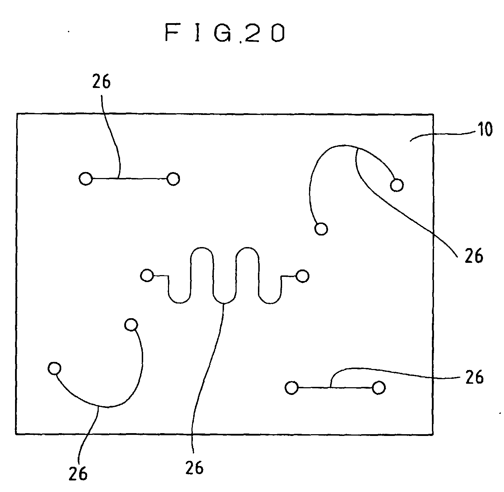

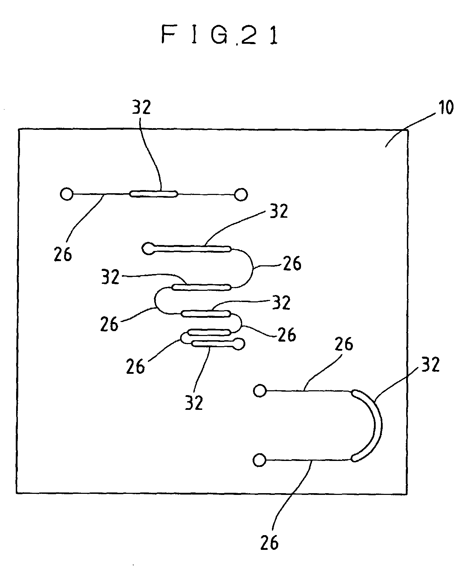

Modifications, which can be, applied common to Test examples 1 to 6 in carrying out them are as shown below:
(1) While the laser beam was irradiated upon the target metal plate on one side only in each test example, the plate may be irradiated with the laser beams on both sides to oppose eachother;
(2) While only two through holes were defined in the target metal plate of each test example, the distance between these two through holes, as well as, the size, shape and number of the through holes can be selected arbitrarily;
(3) Cracks may be formed by forming beforehand predetermined lengths of slits in the target metal plate, followed by welding to fill the slits by irradiation of a beam having extremely high energy density such as a laser beam and form beads along the welded portions, along which cracks are caused to occur;
(4) In the illustrated examples, while a rectilinear crack is generally shown as occurred in each target metal plate, arcuate cracks, zigzag cracks, a combination of rectilinear cracks and curved cracks, etc. may be formed, as shown in Figs. 18 to 20;
(5) The crack occurred in the target metal plate may be designed to open at one extremity to the open end of the metal plate;
(6) The crack occurred in the target metal plate may, as necessary, be filled with a viscoelastic resin. Here, the viscoelastic resin is selected from resins having properties of showing fluidity in filling and curing with time. Meanwhile, as shown in Fig. 21, the operation of filling the slits with a viscoelastic resin can be facilitated if slit-like through holes 32 are defined by laser processing in a target metal plate and if cracks 26 are formed to connect these through holes 32, filling of the cracks with the resin can be facilitated;
(7) Arrangement patterns of cracks including the shape and number of cracks to be formed in target metal plates are shown in Figs. 18 to 21. Figs. 18 and 19 each show an example where the present invention is applied to a circular saw. Figs. 20 and 21 each show an example where the present invention is applied to a damping plate to be used in a housing of an apparatus which generates great noises; and
(8) The target metal plate may be subjected beforehand to pretreatment such as hardening.

### EFFECT OF THE INVENTION

As has been described above, in the damping plate according to the present invention, linear beads or quench hardened portions are formed at strategic positions of a metal plate, along which cracks are caused to occur, so that the cracks can exhibit damping effect. These cracks can be formed merely by irradiating a beam having extremely high energy density such as a laser beam and an electron beam. Therefore, there is no need of using a copper-containing damping material as used in the damping steel plate having a three-layer structure as described referring to Prior Art 1, and the production process can be simplified, thus achieving cost cutting.

Further, in the damping structures of Prior Art 2 and 4, the internal surfaces of a slit defined in each base are not brought into so intimate contact as are meshed with each other, whereas the internal surfaces of the crack occurred in the damping plate of the present invention have serrated cross sections and are meshed with each other. Therefore, in the damping plate according to the present invention, since the internal surfaces or the cut faces of the crack are serrated and are meshed with each other, deflection in the base (so-called unevenness in the alignment of sawteeth) along the slit hardly occurs, even if the plate is subjected to a great external sideward force. In addition, since the slit is not filled with a resin, unlike the damping steel plate described referring to Prior Art 3, the trouble can be obviated that the resin falls off from the slit with time as the tool is used.

## Claims

1. A damping plate wherein a linear bead is formed at a necessary position of a metal plate and a crack portion occurred along the bead is intended to impart a damping effect to the metal plate.

2. The damping plate according to Claim 1, in which a steel plate having a high quench hardenabiity is used as said metal plate.

3. The damping plate according to Claim 1, in which a plate of an aluminum alloy or of an austenite stainless steel having low quench hardenability is used as said metal plate.

4. The damping plate according to any of Claims 1 to 3, wherein said linear bead is formed by irradiating the metal plate with a laser beam or an electron beam having extremely high energy density while the beam is moved relative to the metal plate to melt the irradiated portion, followed by solidification, thus forming the crack in the bead in a process that the thus molten irradiated portion is cooled.

5. A damping plate wherein a linear quench hardened portion is formed at a necessary position of a steel plate having high quench hardenability and a crack portion occurred along this hardened portion is intended to impart a damping effect to the steel plate.

6. The damping plate according to Claim 5, wherein the linear quench hardened portion is formed by irradiating the steel plate with a laser beam or an electron beam having extremely high energy density while the beam is moved relative to the steel plate to effect quench hardening of the irradiated portion, thus inducing the crack in the quench hardened portion.

7. The damping plate according to Claim 2 or 5, wherein the steel plate having high quench hardenability is of a kind of steel which gives a Rockwell C scale hardness (HRc) of 55 or more when subjected to quench hardening.
